# EUROPÄISCHE PATENTSCHRIFT

(11) **EP 0 597 155 B1**
(45) Veröffentlichungstag und Bekanntmachung des Hinweises auf die Patenterteilung: **07.05.1997**
(21) Anmeldenummer: 92250334.7
(22) Anmeldetag: 13.11.1992
(51) Int. Cl.: B29B 13/02, C08G 63/90, B29B 13/06, B29K 67/00

(54) **Verfahren und Vorrichtung zum kontinuierlichen Kristallisieren von Kunststoffgranulat**
Method and device for the continuous crystallization of plastic pellets
Procédé et appareil pour la cristallisation en continu des granulés en matière plastique

(43) Veröffentlichungstag der Anmeldung: 18.05.1994
(73) Patentinhaber: KARL FISCHER INDUSTRIEANLAGEN GMBH, D-13509 Berlin (DE)
(72) Erfinder: Weger, Friedrich, Dr.-Ing., W-1000 Berlin 19 (DE)
(74) Vertreter: Pfenning, Meinig & Partner

(56) Entgegenhaltungen:
- EP-A- 0 091 566
- EP-A- 0 407 876
- WO-A-89/11073
- DE-A- 2 052 334
- FR-A- 1 327 555
- US-A- 3 325 913
- PATENT ABSTRACTS OF JAPAN vol. 13, no. 237 (M-833)(3585) 5. Juni 1989 & JP-A-10 49 605 (MATSUI SEISAKUSHO K.K.) 27. Februar 1989
- PATENT ABSTRACTS OF JAPAN vol. 12, no. 302 (M-732)(3149) 17. August 1988 & JP-A-63 078 707 (DAITO KIKAI K.K.) 8. April 1988

## Beschreibung

Die Erfindung betrifft ein Verfahren und eine Vorrichtung zum kontinuierlichen Kristallisieren von Kunststoffgranulat, insbesondere von amorphem Kunststoffgranulat nach dem Oberbegriff des Hauptanspruchs und des nebengeordneten Vorrichtungsanspruchs.

Es ist bekannt, daß bei Homo- oder Copolyester auf der Basis von Polyethylenterephthalat (PET) beim Übergang vom amorphen in den kristallinen Zustand im Temperaturbereich von ca. 70 bis 160° C ein Erweichen und ein partielles Schmelzen eintritt, mit der Folge, daß das Granulat mehr oder weniger zu einem starken Verkleben neigt. Beim Durchschreiten dieser Verklebungsphase ist es notwendig, daß die einzelnen Granulatkörner untereinander ständig in Bewegung sind und eine längere Kontaktzeit vermieden wird, die ein Zusammenschmelzen zu größeren Agglomeraten zur Folge hat. Zur Erzielung und Aufrechterhaltung einer solchen intensiven Bewegung gibt es im Stand der Technik eine Reihe von verschiedenen Verfahren.

Bei der klassischen Wirbelschicht wird die Granulatschüttung mit einem Heißgas in einer solchen Menge durchströmt, daß die einzelnen Körner im fluidisierten Zustand auf die Kristallisationstemperatur erwärmt und kristallisiert werden. Dieses Verfahren ist jedoch aufgrund der erforderlichen hohen Luftmenge sehr energieintensiv. Die Erfahrung hat gezeigt, daß diese sanfte Fluidisierung bei der Kristallisation von modifiziertem Polyester, einem Polyester mit einer höheren Konzentration von organischen oder anorganischen Co-Komponenten, nicht mehr ausreicht und zur Bildung von größeren Agglomeraten führt, da die Klebrigkeit durch diese Komponenten erhöht wird.

Eine noch intensivere Verwirbelung und damit eine einhergehende Verminderung der Agglomeratbildung während der Kristallisationsphase wird durch eine pulsierende Gasströmung nach dem Sprudelschichtverfahren erreicht, aber auch dieses Verfahren ist sehr energieintensiv und erfordert einen hohen apparatetechnischen Aufwand.

Bewährt hat sich ein Verfahren, bei dem die Granulatkörner durch Rührelemente bewegt werden (DE 32 13 025). Die Granulatschüttung durchströmt dabei den Rührbehälter von oben nach unten, wobei es im Gegenstrom eines heißen Gases, das in dem unteren Teil des Reaktors eingeblasen wird, auf die notwendige Kristallisationstemperatur erwärmt wird. Ein Zusammenkleben der einzelnen Granulatkörner beim Durchlaufen der kritischen Klebephase wird durch ein langsam drehendes Rührwerk verhindert. Dieses Verfahren hat sich insbesondere für Homopolyester sehr bewährt, da es auch in energetischer sowie apparatetechnischer Hinsicht gegenüber den oben beschriebenen Verfahren ein Minimum darstellt. Wird jedoch nach diesem Verfahren ein Copolyester kristallisiert, reicht die mechanische Bewegung der Granulatkörner durch die Rührflügel wegen der durch die Co-Komponente herabgesetzte Kristallisationsgeschwindigkeit und damit verstärkten und verlängerten Klebephase nicht mehr aus, ein agglomeratfreies Kristallisieren zu gewährleisten.

Die WO 89/11073 betrifft eine Wirbel- bzw. Sprudelschichtkammer, die einen Düsen-Lochboden über den Querschnitt der Wirbelkammer aufweist, wodurch viel Wirbelluft benötigt wird.

Der vorliegenden Erfindung liegt somit die Aufgabe zugrunde, ein Verfahren und eine Vorrichtung zum kontinuierlichen Kristallisieren von Kunststoffgranulat, insbesondere von amorphem Kunststoffgranulat zu schaffen, bei denen eine intensive Bewegung der Granulatkörner zeitlich und örtlich in dem Bereich gewährleistet wird, in dem der Übergang vom amorphen in einen teilkristallinen Zustand, also in dem Bereich mit der stärksten Klebeneigung, stattfindet.

Diese Aufgabe wird erfindungsgemäß durch die kennzeichnenden Merkmale der beiden unabhängigen Ansprüche in Zusammenhang mit den Merkmalen des jeweiligen Oberbegriffs gelöst.

Bei dem erfindungsgemäßen Verfahren und der entsprechenden Vorrichtung wird die intensive Bewegung durch die gezielte Zuführung einer Gasströmung an verschiedenen Stellen über den Querschnitt gesehen, die über Düsen in diesen Bereich der Schüttung eingetragen wird, erreicht. Diese Düsen sind in den obersten Rührarmen des Rührwerks angeordnet und bestreichen infolge der Drehbewegung des Rührwerks den gesamten Querschnitt des zylindrischen Kristallisators. Der erforderliche Gasstrom wird von außen in den Kristallisator über einen Verteilerring in die Rührwelle, die in diesem Bereich als Hohlwelle ausgebildet ist, eingeleitet und von der Hohlwelle in einen oder mehrere der oberen Rührarme, die ebenfalls als Hohlprofilflügel ausgeführt sind, verteilt. Aus diesen Hohlflügeln tritt das Gas nun mit hoher Geschwindigkeit über eine oder mehrere Düsenbohrungen aus und bewirkt im Bereich der darüberliegenden Granulatschüttung, die eine Schichthöhe von 20 bis 80 mm, vorzugsweise 30 bis 50 mm aufweist, einen fontänenartigen Ausbruch mit heftiger Verwirbelung und entsprechend intensiver Bewegung mit nur kurzer Kontaktzeit der kristallisierenden Granulatkörner. Bei diesem eruptionsartigen Ausstoß kommt es weiterhin zu dem positiven Effekt der Rückvermischung mit bereits teilkristallisiertem Granulat, also Granulat mit nicht mehr so stark zum Kleben neigenden Oberflächen, wodurch die Gefahr der Agglomeratbildung weiter reduziert wird.

Durch die in den Unteransprüchen angegebenen Maßnahmen sind vorteilhafte Weiterbildungen und Verbesserungen möglich.

Ein Ausführungsbeispiel der Erfindung ist in der Zeichnung dargestellt und wird in der nachfolgenden Beschreibung näher erläutert. Es zeigen:
- Fig. 1: eine teilweise geschnittene schematische Darstellung der Seitenansicht der erfindungsgemäßen Vorrichtung,
- Fig. 2: eine Teildarstellung der Rührwelle mit einem daran angeordneten Rührarm in geschnittener Darstellung,
- Fig. 3: eine schematische Ansicht eines Reaktors zur kontinuierlichen Nachkondensation, bei dem die erfindungsgemäße Vorrichtung verwendet wird.

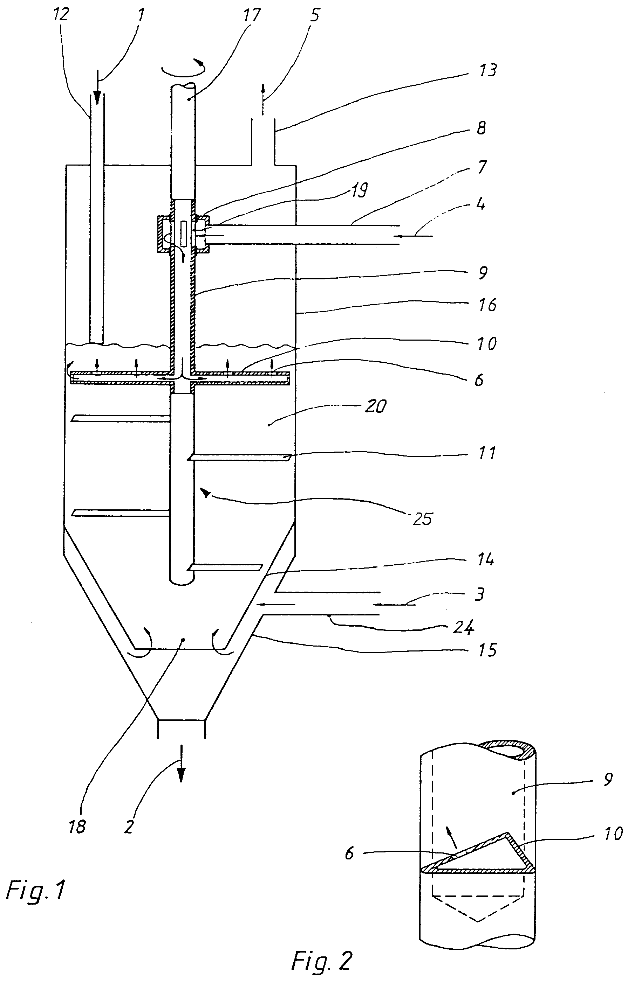

Die in Fig. 1 vereinfacht dargestellte Vorrichtung weist einen zylindrischen Behälter 16 mit einem konischen Granulatauslaßstutzen 15 auf, dessen Neigungswinkel vorzugsweise 25 bis 30° beträgt. Ein doppelwandiges und gekühltes Granulatzufuhrrohr 12 ist im oberen Bereich des Behälters 16 angeordnet und ragt in das Innere des Behälters hinein, wobei das Ende des Zulaufrohrs 12 gleichzeitig die Schütthöhe des Granulats im Behälter bzw. Kristallisator begrenzt und somit auch das Granulatniveau bestimmt. Der Behälter 16 ist mit einem in den Granulatauslaßstutzen 15 hineinragenden Innenkonus 14 versehen und an den Granulatauslaßstutzen 15 ist eine Zufuhrleitung 24 für das Primärgas 3 angeordnet. Ein Gasauslaßstutzen 13 zum Abführen von Abgas 5 ist am oberen Bereich des Behälters 16 vorgesehen.

In den Behälter ragt ein Rührwerk 25 hinein, das eine über einen Getriebemotor 26 angetriebene Rührwerkswelle 17 und Rührarme 10, 11 aufweist. Ein Teil der Rührwerkswelle 17 ist als Hohlwelle 9 ausgebildet, deren Innenraum über in der Wand der Hohlwelle 9 angebrachte Schlitze 19 und einen im Bereich der Schlitze 19 angebrachten, einen ringförmigen Hohlraum bildenden Verteilerring 8 mit einer Zufuhrleitung 7 für Sekundärgas 4 in Verbindung steht. Zumindest die sich im oberen Bereich der Granulatschüttung 20 befindenden Rührarme sind als Hohlprofilflügel 10 ausgebildet, deren Innenraum wiederum mit dem Innenraum der Hohlwelle 9 in Verbindung stehen. In den Hohlprofilflügeln 10 sind nach oben gerichtete Düsen 6 mit einem Durchmesser von 1 bis 8 mm, vorzugsweise 3 bis 5 mm, abhängig von der Querschnittsfläche des Behälters 16, vorgesehen. Wie genauer in Fig. 2 dargestellt ist, kann der Hohlprofilflügel 10 einen dreieckförmigen Querschnitt aufweisen, wobei die Düsen 6 in den nach oben gerichteten Seitenwänden angeordnet sind. Im oberen Bereich der Granulatschüttung sind zwei oder mehr Hohlprofilflügel 10 in einer Ebene angeordnet und in den darunterliegenden Bereichen ist die Rührwerkswelle 17 mit mehreren, vorzugsweise 4 bis 8 Vollprofilflügeln 11 ausgerüstet.

Das amorphe Granulat 1 wird über das Zulaufrohr 12 vorzugsweise stetig in den Kristallisator eingefüllt, wodurch die nach unten aus dem Granulatauslaßstutzen 15 fließende Granulatschüttung 20 ständig bis zu der durch das Ende des Zulaufrohrs 12 bestimmten Schütthöhe aufgefüllt wird. Das über die Zufuhrleitung 24 einströmende Primärgas 3 strömt in dem durch den Innenkonus 14 und den Granulatauslaßstutzen 15 gebildeten ringförmigen Zwischenraum an der Außenwand des Innenkonus 14 entlang und tritt bei 18 in die Granulatschüttung 20 ein und durchströmt diese im Gegenstrom vertikal aufwärts. Die Temperatur des Gasstroms 3 entspricht der gewünschten Kristallisationstemperatur des Granulats. Im oberen Bereich der Granulatschüttung dient diese Gasströmung zum Aufheizen des amorphen Granulats von Umgebungstemperatur auf Kristallisationstemperatur sowie zur Abführung der Kristallisationswärme aus dieser Zone. Das Verhältnis Primärgas-/Granulatmassenstrom beträgt 2 bis 4 kg/kg vorzugsweise 2,5 bis 3 kg/kg.

Das Sekundärgas (Wirbelgas) 4 wird je nach den Erfordernissen der Granulateigenschaften als Kalt- oder Heißgas über die Zufuhrleitung 7 dem Verteilerring 8 zugeführt und von diesem über die Schlitzöffnungen 19 in die Hohlwelle 9 des Rührwerks 25 und von dort über radiale Öffnungen in die Hohlprofilflügel 10 geleitet. Von dort strömt es über eine oder mehrere Düsen in die amorphe Granulatdeckschicht ein und führt zu der gewünschten intensiven Verwirbelung des Granulats. Die Düsen 6 liegen dabei in einer Schichttiefe von 20 bis 80 mm, vorzugsweise 30 bis 50 mm. Die Rührwerkswelle 17 wird über den Getriebemotor mit einer Drehzahl zwischen zwei und drei Umdrehungen pro Minute angetrieben, so daß das aus den Düsen 6 der sich drehenden Hohlprofilflügel 10 den gesamten Querschnitt der Granulatdeckschicht aufwirbelt.

Das aus Primärgas 3 und Sekundärgas 4 gebildete Heißgas verläßt schließlich den Behälter 16 über den Abgasstutzen 13.

Das über das Zulaufrohr 12 frisch zugeführte amorphe Granulat wird im oberen Bereich der Granulatschüttung 20 aufgeheizt, wobei es gleichzeitig verwirbelt wird, so daß ein Verkleben nicht auftreten kann. Nach Durchlaufen dieser Aufheiz- und ersten Kristallisationsphase, die im Bereich von ungefähr 3 bis 5 Minuten liegt, gelangt das Granulat durch das stete Absinken der Granulatschüttung in tiefere Bereiche, in denen die jetzt nicht mehr gasdurchströmten starren Rührarme 11 eine sanfte Schub- und Gleitbewegung der einzelnen Granulatkörner bewirken. Dieser Teil der Granulatschüttung wird mit dem im Gegenstrom von unten kommenden heißen Gas durchströmt, wobei die Gasmenge auf ein Minimum reduziert ist, das so bemessen ist, daß gerade die Wärmekapazität zur Aufheizung des Granulats auf Kristallisationstemperatur und weiterhin eine gleichmäßige Durchströmung über den gesamten Querschnitt des Behälters gewährleistet wird. Bereits kurz unterhalb der Aufheizzone herrschen isoterme Bedingungen, die aufgrund der um ein Vielfaches höheren Verweilzeit und dem engen Verweilzeitspektrum gegenüber derjenigen in der oberen Verwirbelungszone zu einem konstanten Kristallisationsgrad führen.

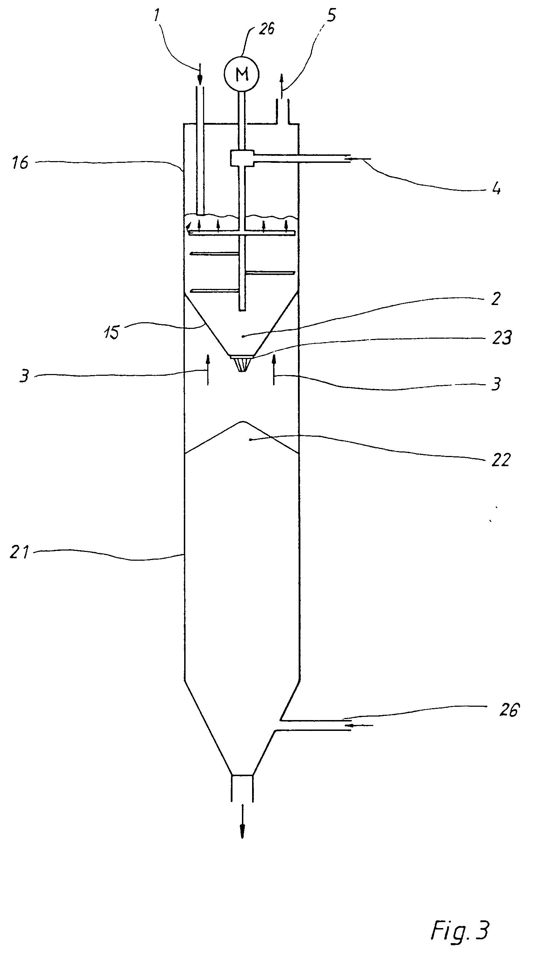

In Fig. 3 ist der Behälter 16 in einem Schachttrockner oder Reaktor zur kontinuierlichen Nachkondensation integriert und der Behälter 16 bildet zusammen mit dem unteren Reaktorteil einen durchgehenden Rohrreaktor als eine Einheit. Dabei ist an dem Granulatauslaßstutzen 15 eine Granulatschleuse 23 angeordnet, über die das kristallisierte und aufgeheizte Granulat 2 in den unteren Reaktorteil 21 gelangt. In diesem Fall dient das aus der Granulatschicht 22 austretende heiße Trockengas, das im unteren Bereich des unteren Reaktorteils über die Zuleitung 26 zugeführt wurde, als Primärgas 3. Dabei ist der Granulatauslaßstutzen als Siebkonus ausgebildet und das Primärgas 3 tritt auf diese Weise in den Kristallisator ein.

## Patentansprüche

1. Verfahren zum kontinuierlichen Kristallisieren von Kunststoffgranulat, bei dem das Granulat in einen Behälter eingeführt wird, sich durch die Schwerkraft nach unten bewegt und im Gegenstrom durch die Granulatschüttung ein heißes Gas als Primärgas geführt wird, wobei das Granulat durch Rühren bewegt wird, dadurch gekennzeichnet, daß Sekundärgas über mindestens einen rotierenden Verteilerarm über den Querschnitt des Behälters mit hoher Geschwindigkeit in einer bestimmten Schichttiefe der Granulatschüttung in den oberen Bereich eingeleitet wird, das zusammen mit dem Primärgas nach oben strömt.

2. Verfahren nach Anspruch 1, dadurch gekennzeichnet, daß das Sekundärgas in einer Schichttiefe von 20 bis 80 mm, vorzugsweise 30 bis 50 mm, eingeleitet wird.

3. Vorrichtung zum kontinuierlichen Kristallisieren von Kunststoffgranulat mit einem eine sich von oben nach unten bewegende Granulatschüttung aufnehmenden Behälter, der einen Zulauf und einen Auslaß für das Granulat, einen Einlaßstutzen für die Zufuhr von heißem Primärgas und einen Abgasstutzen aufweist, wobei das Gas die Granulatschüttung im Gegenstrom durchströmt, und mit einer Rührvorrichtung zum Bewegen des Granulats im Behälter,
**dadurch gekennzeichnet,**
daß eine zusätzliche Gaszufuhreinrichtung (7,9,10) vorgesehen ist, die mindestens einen Verteilerarm (10) aufweist, der Sekundärgas mit hoher Geschwindigkeit an mehreren über den Querschnitt des Behälters (16) verteilten Stellen in den oberen Bereich der Granulatschüttung (20) einleitet.

4. Vorrichtung nach Anspruch 3, dadurch gekennzeichnet, daß die Rührvorrichtung eine zumindest teilweise als Hohlwelle (9) ausgebildete drehbare Rührwerkswelle (17) aufweist, die Rührarme (10,11) trägt, und mindestens ein Rührarm, den Verteilerarm bildend, als Hohlprofilflügel (10) ausgebildet und mit der Hohlwelle (9) verbunden ist und Düsen (6) aufweist, wobei die Hohlwelle (9) mit einer Gaszufuhrleitung (7) verbunden ist und Gaszufuhrleitung (7), Hohlwelle (9) und Hohlprofilflügel (10) die Gaszufuhreinrichtung bilden.

5. Vorrichtung nach Anspruch 3 oder 4, dadurch gekennzeichnet, daß der mindestens eine Hohlprofilflügel (10) einen dreieckförmigen Querschnitt aufweist und in den nach oben gerichteten Flächen die Düsen (6) angeordnet sind.

6. Vorrichtung nach einem der Ansprüche 3 bis 5, dadurch gekennzeichnet, daß mehrere Hohlprofilflügel (10) in einer Ebene in einer Schichttiefe von 20 bis 80 mm, vorzugsweise 30 bis 50 mm, in der Granulatschüttung (20) liegen.

7. Vorrichtung nach einem der Ansprüche 3 bis 6, dadurch gekennzeichnet, daß die Düsen (6) einen Durchmesser von 1 bis 8 mm, vorzugsweise 3 bis 5 mm, aufweisen.

8. Vorrichtung nach einem der Ansprüche 3 bis 7, dadurch gekennzeichnet, daß die Gaszufuhrleitung (7) für das Sekundärgas (4) mit einem um den Umfang der Hohlwelle (9) herum angeordneten Verteilerring (8) verbunden ist, wobei der Verteilerring (8) gegen die sich drehende Hohlwelle (9) abgedichtet ist und daß die Hohlwelle (9) im Bereich des Verteilerringes (8) Öffnungen (19) aufweist.

9. Verwendung einer Vorrichtung nach einem der Ansprüche 3 bis 8 in einem Schachttrockner oder einem Reaktor zur Nachkondensation, wobei die Vorrichtung integraler Bestandteil des Schachttrockners oder des Reaktors ist.

## Claims

1. Method for continuous crystallisation of plastic pellets, in which the pellets are fed into a container, moved downwards by way of gravity and a hot gas is as a primary gas ducted in counter-flow through the pellet charge, and the pellets are moved by agitation, **characterised in that** the secondary gas is introduced via at least one rotating distributor arm over the cross-section of the container and at high speed in a specified bed depth of the pellet charge into the upper area and which flows together with the primary gas upwards.

2. Method according to Claim 1, **characterised in that** the secondary gas is introduced at a bed depth between 20 and 80 mm, preferably 30 to 50 mm.

3. Device for continuous crystallisation of plastic pellets, comprising a container which accommodates a pellet charge which moves from top to bottom, with an inlet and an outlet for the pellets, an inlet socket for delivery of hot primary gas and a waste gas socket, and with the gas flowing in counter-flow through the pellet charge, and with an agitating device for moving the pellets in the container, **characterised in that** an additional gas delivery device (7, 9, 10) is provided, comprising at least one distributor arm (10) which introduces secondary gas at high speed at a plurality of points spaced cross-sectionally over the container (16) into the upper region of the pellet charge (20).

4. Device according to Claim 3, **characterised in that** the agitating device comprises a rotary agitator shaft (17), which is at least partially designed as a tubular shaft (9) and comprises agitating arms (10, 11), and at least with agitating arm serving as a distributor arm and designed as a tubular wing (10) and connected to the tubular shaft (9) with nozzles (6), and the tubular shaft (9) is connected to a gas supply pipe (7), tubular shaft (9) and tubular profile wing (10) serving as gas supply device.

5. Device according to Claim 3 or 4, **characterised in that** the at least one tubular profile wing (10) is of triangular cross-section and the nozzles (6) are arranged in the upwardly oriented surfaces.

6. Device according to one of Claims 3 to 5, **characterised in that** a plurality of tubular profile wings (10) is positioned in one plane at a bed depth between 20 and 80 mm, preferably between 30 and 50 mm, in the pellet charge (20).

7. Device according to one of Claims 3 to 6, **characterised in that** the nozzles (6) have a diameter between 1 and 8 mm, preferably between 3 and 5 mm.

8. Device according to one of Claims 3 to 7, **characterised in that** the gas supply pipe (7) for the secondary gas (4) is connected to a distributor ring (8) which is arranged around the periphery of the tubular shaft (9), and the distributor ring (8) is sealed against the rotary tubular shaft (9), and the tubular shaft (9) has openings (19) in the area of the distributor ring (8).

9. Application of a device according to Claims 3 to 8 in a furnace dryer or a reactor for post-condensation, with the device being an integral part of the furnace dryer or the reactor.

## Revendications

1. Procédé pour la cristallisation en continu de granulés de matière plastique, selon lequel on introduit dans un récipient les granulés, qui descendent sous l'action de la pesanteur, et on fait circuler à contre-courant un gaz chaud en tant que gaz primaire, à travers la masse en vrac des granulés, les granulés étant déplacés par agitation, caractérisé en ce qu'on introduit un gaz secondaire à grande vitesse par l'intermédiaire d'au moins un bras de distribution rotatif, sur la section transversale du récipient, dans une profondeur de couche déterminée à la partie supérieure de la masse des granulés en vrac, le gaz secondaire circulant selon un déplacement ascendant conjointement avec le gaz primaire.

2. Procédé selon la revendication 1, caractérisé en ce que le gaz secondaire est introduit sur une profondeur de couche de 20 à 80 mm, de préférence de 30 à 50 mm.

3. Dispositif pour la cristallisation en continu de granulés de matière plastique, comportant un récipient recevant une masse de granulés en vrac se déplaçant de haut en bas, et qui comporte une arrivée et une sortie pour les granulés, une tubulure d'admission pour l'introduction de gaz primaire chaud et une tubulure d'évacuation du gaz, le gaz traversant à contre-courant la masse des granulés en vrac, et comportant un dispositif d'agitation pour déplacer les granulés dans le récipient, caractérisé en ce qu'il est prévu un dispositif supplémentaire d'amenée de gaz (7,9,10), qui possède au moins un bras de distribution (10), qui introduit un gaz secondaire à grande vitesse en plusieurs emplacements, répartis sur la section transversale du récipient (16), dans la partie supérieure de la masse des granulés en vrac (20).

4. Dispositif selon la revendication 3, caractérisé en ce que le dispositif d'agitation comporte un arbre rotatif d'agitateur (17) agencé au moins en partie sous la forme d'un arbre creux (9) et qui porte des bras d'agitation (10,11), et qu'au moins un bras d'agitation, qui constitue le bras de distribution, est agencé sous la forme d'une ailette à profil creux (10) et est relié à l'arbre creux (9) et comporte des buses (6), l'arbre creux (9) étant relié à une canalisation d'amenée de gaz (7), la canalisation d'amenée de gaz (7), l'arbre creux (9) et l'ailette à profil creux (10) formant le dispositif d'amenée de gaz.

5. Dispositif selon la revendication 3 ou 4, caractérisé en ce qu'au moins une ailette à profil creux (10) possède une section transversale triangulaire et que les buses (6) sont disposées dans les surfaces tournées vers le haut.

6. Dispositif selon l'une des revendications 3 à 5, caractérisé en ce que plusieurs ailettes à profil creux (10) sont situées dans un plan, à une profondeur de couche de 20 à 80 mm, de préférence de 30 à 50 mm, dans la masse des granulés en vrac (20).

7. Dispositif selon l'une des revendications 3 à 6, caractérisé en ce que les buses (6) possèdent un diamètre de 1,8 mm, de préférence de 3 à 5 mm.

8. Dispositif selon l'une des revendications 3 à 7, caractérisé en ce que la canalisation d'amenée de gaz (7) pour le gaz secondaire (4), est reliée à un anneau de distribution (8) disposé autour de la périphérie de l'arbre creux (9), l'anneau de distribution (8) étant fermé de façon étanche par rapport à l'arbre creux rotatif (9), et en ce que l'arbre creux (9) possède des ouvertures (19) dans la zone de l'anneau de distribution (8).

9. Utilisation d'un dispositif selon l'une des revendications 3 à 8 dans un séchoir à couloir ou dans un réacteur pour une post-condensation, le dispositif faisant partie intégrante du séchoir à couloir ou du réacteur.
